# FASCICULE DE BREVET EUROPEEN

(11) **EP 3 262 391 B1**
(45) Date de publication et mention de la délivrance du brevet: **21.04.2021**
(21) Numéro de dépôt: 16707092.9
(22) Date de dépôt: 26.02.2016
(51) Int. Cl.: G01M 3/40, F16L 11/127, F16L 25/01, F16L 33/22, H01R 13/00

(54) **DISPOSITIF HYBRIDE DE CIRCULATION DE FLUIDE ET DE TRANSMISSION DE SIGNAL**
HYBRIDER FLÜSSIGKEITSKREISLAUF UND SIGNALÜBERTRAGUNGSVORRICHTUNG
HYBRID FLUID CIRCULATION AND SIGNAL TRANSMISSION DEVICE

(30) Priorité: 27.02.2015 FR 1551709
(43) Date de publication de la demande: 03.01.2018
(73) Titulaire: COVAL, 26120 Montelier (FR)
(72) Inventeur: MILHAU, Pierre, 26300 Bourg de Péage (FR); CECCHIN, Michel, 26120 Montelier (FR)
(74) Mandataire: Lavialle, Bruno François Stéphane
(86) Numéro de dépôt international: PCT/EP2016/054122
(87) Numéro de publication internationale: WO 2016/135307

(56) Documents cités:
- EP-A1- 1 513 227
- US-A1- 2010 174 495
- US-A1- 2014 265 561

## Description

L'invention concerne les circuits de transport de fluide et plus particulièrement un tube de circulation de fluide pourvu de pistes conductrices pour transmettre des signaux entre des moyens électroniques. Ces signaux peuvent comprendre un signal de données, un signal de puissance, un signal de continuité de masse...

### ARRIERE PLAN DE L'INVENTION

On connaît des dispositifs de circulation de fluide qui utilisent des tubes pour le transport de fluide dans nombre de secteurs et pour nombre d'applications différentes. Il est désormais courant que les circuits de transport de fluide comportent des équipements électroniques reliés à un circuit électrique pour être alimentés et échanger des signaux de données.

Afin d'assurer le transfert de signaux entre les équipements électroniques précités, ces derniers nécessitent généralement une connectique filaire, qui peut se révéler encombrante, ou sans-fil qui, à défaut d'être encombrante, peut entrainer ou subir des interférences.

Il est connu des documents US-A-2010/0174495, US-A-2014/0265561 et EP-A-1513227 des tubes associés à des conducteurs électriques.

### OBJET DE L'INVENTION

L'invention a pour but de proposer une solution hybride pour le raccordement électrique d'équipements électriques ou électroniques incorporés à un circuit de transport de fluide ou disposés au voisinage d'un tel circuit.

### RESUME DE L'INVENTION

A cet effet, on propose selon l'invention, un dispositif de circulation de fluide selon la revendication 1.

Une telle piste conductrice rend bien sûr accessoire l'utilisation d'une quelconque connectique supplémentaire en ce qu'elle relie elle-même électriquement les moyens électroniques et permet donc l'échange de signaux entre lesdits moyens.

De préférence, la piste conductrice du tube est une bande d'encre conductrice imprimée ou une bande métallisée conductrice.

De préférence toujours, au moins un des moyens électroniques comporte un connecteur coopérant avec la carte électronique et au moins une piste conductrice du tube de circulation de fluide de manière à permettre la transmission d'un signal entre la carte électronique et la piste conductrice via le connecteur.

Selon un agencement spécifique non-limitatif, au moins l'un des deux raccords comporte l'un des moyens électroniques.

Une première solution est alors de fixer ledit moyen électronique à l'extérieur d'au moins un raccord et une seconde solution de disposer le moyen électronique à l'intérieur d'un logement du raccord.

Selon un autre agencement spécifique non-limitatif, au moins l'un des moyens électroniques est indépendant des raccords et est agencé pour être réglable en position le long du tube.

### BREVE DESCRIPTION DES FIGURES

L'invention sera mieux comprise à la lecture de la description qui suit d'un mode de réalisation particulier non limitatif de l'invention.

Il sera fait référence aux dessins annexés, parmi lesquels :
- la figure 1 est une vue schématique du dispositif de circulation de fluide selon l'invention, avec son tube et ses raccords disposés aux extrémités dudit tube,
- la figure 2 est une vue en coupe du tube selon l'invention monté à une de ses extrémités dans un raccord et coopérant avec son électronique associée,
- la figure 3 est une vue en perspective du tube selon l'invention monté dans un raccord et montrant un agencement particulier des connecteurs d'un circuit imprimé coopérant avec les pistes conductrices du tube,
- la figure 4 est une vue en perspective écorchée de moyens électroniques secondaires sous forme d'une bague mobile le long du tube et pourvue d'un indicateur visuel.

### DESCRIPTION DETAILLEE DE L'INVENTION

En référence aux dessins annexés, le dispositif de circulation de fluide 1 selon l'invention comporte un tube 2, préférentiellement en polyamide ou en polyuréthane, de taille et section variables. Ce dispositif s'insère dans un circuit de transport de fluides et peut donc comporter plusieurs tubes et raccords associés. On comprendra que, pour des raisons de simplicité et de clarté de la description, le dispositif est décrit en relation avec un seul tube dédié au transport d'air dans un circuit pneumatique.

Le dispositif de circulation de fluide 1 comporte en outre des raccords (10a, 10b) agencés pour assurer un échange étanche de fluide entre deux unités (100a, 100b) du circuit de fluide, par exemple des unités pneumatiques (pompes à vide, ventouses, caisson à vide, distributeur, actionneur, électrovanne, capteur...), via le tube 2. Un premier raccord 10a est donc raccordé de manière étanche à une première unité de circulation de fluide 100a et à une première extrémité 2a du tube 2, et un deuxième raccord 10b est raccordé de manière étanche à une deuxième unité de circulation de fluide 100b et à une deuxième extrémité 2b du tube 2. Ici, un raccord (10a, 10b) comporte :
- un embout de raccordement 11 adapté pour pénétrer dans une ouverture 7 d'une des extrémités (2a, 2b) du tube 2 ;
- un moyen de verrouillage 12 de l'extrémité (2a, 2b) du tube 2 par rapport à l'embout de raccordement 11, par exemple une coiffe vissée sur l'embout et assurant une étanchéité entre l'embout 11 et le tube 2 ; et
- un carter 13 de protection de l'embout de raccordement 11 et du moyen de verrouillage 12 comportant un trou 13.1 agencé pour laisser passer l'extrémité (2a, 2b) du tube 2.

Un tel dispositif 1 assure donc une circulation de fluide étanche entre deux unités de circulation de fluide (100a, 100b) via un tube 2 raccordé à ses deux extrémités (2a, 2b) par des raccords (10a, 10b) dédiés.

Selon l'invention, le dispositif de circulation de fluide 1 est agencé pour transmettre, via le tube 2, des signaux entre deux moyens électroniques 20 séparés.

En effet, le tube 2 comporte au moins une piste conductrice 3 s'étendant le long de la surface externe du tube 2. Ladite piste 3 est adaptée pour la transmission d'au moins un signal électrique. La section transversale de la piste 3 et la conductivité électrique du matériau sont déterminées en fonction de la puissance des signaux électriques à transmettre. La piste 3 est ici une bande d'encre conductrice réalisée par impression directement sur la surface externe du tube 2.

Les moyens électroniques 20 comportent au moins une carte électronique 5 et au moins un connecteur 6, ici fixé sur la carte électronique 5 et relié électriquement avec des éléments électriquement conducteurs de cette dernière. La carte électronique 5 est par exemple un circuit de traitement de données, un compteur ou autre, relié à une unité de commande connue en elle-même et non représentée. Ici, les connecteurs 6 sont des cosses conductrices flexibles en matériau électriquement conducteur. Les connecteurs 6 ont une extrémité électriquement reliée à la carte électronique 5 et une portion en appui contre une des pistes conductrices 3 du tube 2, de sorte à permettre l'échange de signaux entre la carte électronique 5 et la piste conductrice 3 du tube 2 vers d'autres moyens électroniques 20. On notera que l'extrémité d'un connecteur 6 opposée à l'extrémité en contact avec la carte électronique 5 est recourbée. On notera également que chaque connecteur 6 est agencé de sorte à pouvoir coulisser le long de la piste conductrice 3 contre laquelle il est appliqué. Ceci permet de faciliter la connexion et la déconnexion du tube 2. En outre, ce montage limite tout risque de rupture de la liaison électrique en cas de déplacements impromptus du tube 2.

Les signaux transitant par les pistes conductrices 3 peuvent être des signaux de données ou des signaux de puissance. Les signaux de données contiennent par exemple une instruction de commande d'un actionneur ou des informations provenant de capteurs dont l'état doit être transmis à des moyens de commande, comme un automate programmable. D'une manière générale des signaux de différents types peuvent transiter via la piste 3 et ce vers n'importe quel type d'unité électronique, y compris des signaux de puissance.

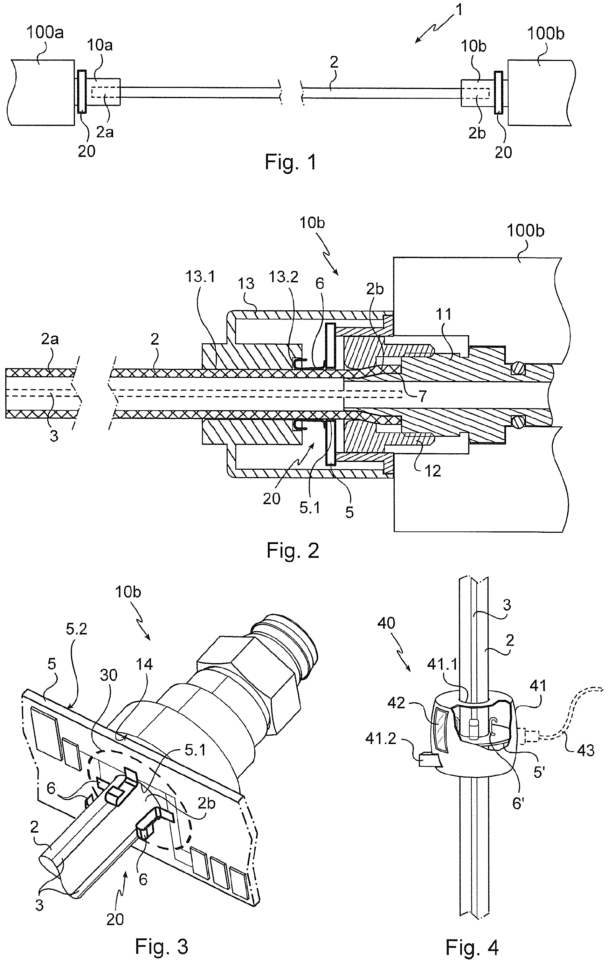

Selon un agencement spécifique non-limitatif de l'invention, particulièrement visible en figure 2, l'un des moyens électroniques 20, comportant la carte électronique 5 et les connecteurs 6, est disposé à l'intérieur d'au moins un raccord (10a, 10b) de sorte à diminuer l'encombrement. De plus, le carter 13 protège avantageusement ledit moyen électronique 20 et tout particulièrement sa liaison électrique avec la piste conductrice 3. Avantageusement toujours, le carter 13 comporte au moins un logement 13.2 adapté pour recevoir au moins un connecteur 6 et le bloquer radialement et/ou axialement afin d'éviter d'éventuels défauts de contact entre le connecteur 6 et une piste conductrice 3, et/ou entre le connecteur 6 et le moyen électronique 20.

La carte électronique 5 comporte un trou 5.1 dans lequel s'étend le tube 2 qui passe ainsi à travers la carte électronique 5. Les connecteurs 6 sont disposés sur le pourtour du trou 5.1 toujours de sorte à coopérer avec au moins une piste conductrice 3 du tube 2. La forme recourbée des extrémités des connecteurs 6 est ici particulièrement pertinente en ce que, disposés de manière périphérique, les connecteurs forment un passage évasé dont le diamètre maximal est supérieur au diamètre extérieur du tube 2. L'insertion dudit tube 2 dans le trou 5.1 de la carte électronique 5 en est donc facilitée.

De préférence ici, plusieurs connecteurs 6 sont disposés sur le pourtour du trou 5.1 de la carte électronique 5 et coopèrent chacun avec une des pistes conductrices 3, chaque liaison entre un connecteur 6 et une piste 3 échangeant un signal différent.

Cette disposition périphérique des connecteurs 6 est également visible en figure 3, laquelle montre en outre un autre agencement spécifique non-limitatif, dans lequel les moyens électroniques 20 sont fixés à l'extérieur d'au moins un raccord (10a, 10b) par des moyens d'assemblage 30 pouvant par exemple prendre la forme d'une colle appliquée entre une première surface de contact 5.2 des moyens électroniques 20 et une seconde surface de contact 14 du raccord associé (10a, 10b). On prendra pour acquis que n'importe quel assemblage mécanique (permanent, démontable, direct et indirect) est possible pour l'assemblage des moyens électroniques 20 à l'extérieur d'un raccord (10a, 10b) .

Toujours selon un agencement spécifique non-limitatif, particulièrement visible en figure 4, le dispositif de circulation de fluide 1 comporte en outre un moyen électronique secondaire 40 d'un autre type que les précédents et indépendant des raccords (10a, 10b). Le moyen électronique secondaire est agencé pour être réglable en position le long du tube 2.

Ici, le moyen électronique secondaire 40 comporte une bague 41 elle-même comportant un trou 41.1 agencé pour recevoir le tube 2 à coulissement. La bague 41 comporte également au moins un connecteur 6' sensiblement similaire aux connecteurs 6 décrits précédemment et agencé pour coopérer avec au moins une piste conductrice 3 du tube 2, une carte électronique 5' de traitement des signaux transitant via une ou plusieurs pistes conductrices 3 et un indicateur 42 coopérant avec la carte électronique 5' et agencé pour délivrer une information de nature sonore ou visuelle caractéristique de la présence d'au moins un signal électrique transitant via une ou plusieurs pistes conductrices 3. La bague 41 comprend en outre un dispositif d'arrêt 41.2 permettant de bloquer la position de la bague 41 le long du tube 2. Ce dispositif d'arrêt 41.2 est ici un dispositif de serrage actionné par un bouton poussoir (partiellement représenté). Ce dispositif de serrage comprend un anneau comportant un trou agencé pour recevoir le tube 2 à coulissement. L'anneau est monté dans la bague 41 pour être mobile radialement entre une position de desserrage dans laquelle l'anneau et la bague 41 sont coaxiaux et autorisent un coulissement de la bague sur le tube 2, et une position de serrage dans laquelle l'anneau et la bague 41 sont désaxés et enserrent entre eux le tube 2. L'anneau est rappelé élastiquement dans la position de serrage. En variante les moyens de serrage peuvent comprendre une vis engagée radialement dans la bague 41 pour prendre appui contre la surface externe du tube.

C'est donc entre autre un indicateur d'état que l'on peut obtenir grâce à ce moyen électronique secondaire 40 mobile, ce dernier permettant notamment de délivrer une information simple, comme un voyant allumé ou un signal sonore, par exemple sur la présence ou l'absence de courant circulant dans les pistes conductrices.

De manière générale, l'un des moyens électroniques 20/40 peut servir de relais en faisant transiter des signaux et/ou des informations résultant d'un traitement des signaux vers d'autres unités électroniques (non-représentées), par exemple par le biais d'une connectique filaire 43 ou sans-fil (non-représentée). De fait, l'un des moyens électroniques peut aussi servir d'antenne.

Le dispositif 1 permet donc de créer un réseau de circulation de fluide intelligent, qu'il soit hydraulique ou pneumatique, capable de lire et rapatrier des informations et de la puissance en différents points dudit réseau, et ce directement par le biais des tubes de circulation de fluide.

L'invention n'est pas limitée à ce qui vient d'être décrit, mais englobe au contraire toute variante entrant dans le cadre défini par les revendications.

En particulier, les moyens électroniques peuvent comprendre n'importe quel capteur, appareil de mesure, ou dispositif de commande de la partie dite « opérative » d'un système automatisé. On pensera à tout type d'actionneur ou pré-actionneur pouvant être commandé par un automate programmable industriel.

De plus, la disposition des moyens électroniques le long du tube peut varier en fonction des besoins et ne dépend en aucun cas de la position des raccords.

Le nombre, la forme et la disposition des pistes et des connecteurs dédiés peuvent également varier.

Lesdits connecteurs ne sont d'ailleurs pas nécessairement mobiles et peuvent simplement être des soudures conductrices.

Bien entendu, le matériau du tube ainsi que la forme, le diamètre ou l'épaisseur de sa section peuvent varier tout en restant dans le cadre de l'invention.

En variante, la piste conductrice est formée d'une bande métallisée conductrice rapportée sur ladite surface externe du tube, par exemple collée le long du tube.

Le tube peut également comporter une protection pour les pistes conductrices telle qu'une couche de vernis ou une gaine isolée, qu'elle soit blindée ou non, contre les agressions mécaniques, chimiques, électromagnétiques ou les courts-circuits.

Les raccords peuvent également varier en fonction de l'utilisation du dispositif selon l'invention. En effet, des raccords dits instantanés, à olive ou à canule peuvent aussi convenir pour assurer le raccordement et l'étanchéité entre une extrémité du tube et l'unité de circulation de fluide associée.

Le dispositif d'arrêt de la bague peut lui aussi prendre nombre de formes différentes et il ne fait aucun doute que n'importe quel système de blocage remplissant les fonctions d'arrêt et de libération souhaitées rentre dans le cadre de l'invention.

Le dispositif peut aussi comprendre des moyens électroniques primaires à une seule extrémité des pistes conductrices et des moyens électroniques secondaires en un point de celles-ci.

## Revendications

1. Dispositif de circulation de fluide (1) comportant au moins un tube de circulation de fluide (2), un premier raccord (10a) raccordé de manière étanche à une première extrémité (2a) du tube (2) et un deuxième raccord (10b) raccordé de manière étanche à une deuxième extrémité (2b) du tube (2) de sorte à permettre la circulation de fluide entre ces deux raccords (10a, 10b) via le tube (2), le dispositif (1) comportant en outre des moyens électroniques (20) séparés l'un de l'autre et le tube (2) comportant au moins une piste conductrice (3) s'étendant le long d'une surface externe du tube (2), ladite piste (3) étant adaptée pour la transmission d'au moins un signal et agencée pour coopérer avec les moyens électroniques (20) précités , **caractérisé en ce que** l'un au moins des moyens électroniques (20) comporte au moins une carte électronique (5, 5') comportant un trou (5.1) agencé de sorte à ce que le tube de circulation de fluide (2) passe à travers la carte électronique (5, 5').

2. Dispositif de circulation de fluide selon la revendication 1, dans lequel la piste conductrice (3) est une bande métallisée conductrice rapportée sur la surface externe du tube (2).

3. Dispositif de circulation de fluide selon la revendication 1, dans lequel la piste conductrice (3) est une bande d'encre conductrice imprimée.

4. Dispositif de circulation de fluide selon l'une quelconque des revendications précédentes, dans lequel l'un au moins des moyens électroniques (20) comporte un connecteur (6) coopérant avec la carte électronique (5) et la piste conductrice (3) du tube de circulation de fluide (2) de manière à permettre la transmission d'un signal entre la carte électronique (5) et la piste conductrice (2) via le connecteur (6).

5. Dispositif de circulation de fluide selon l'une quelconque des revendications précédentes, dans lequel au moins l'un des deux raccords (10a, 10b) comporte un moyen électronique primaire (20).

6. Dispositif de circulation de fluide selon la revendication 5, dans lequel l'un au moins des moyens électroniques (20) est fixé à l'extérieur du raccord (10a, 10b) .

7. Dispositif de circulation de fluide selon la revendication 5, dans lequel l'un au moins des moyens électroniques (20) est contenu dans un logement de raccord (10a, 10b).

8. Dispositif de circulation de fluide selon l'une quelconque des revendications précédentes, comportant au moins un moyen électronique secondaire (40) indépendant des raccords (10a, 10b).

9. Dispositif de circulation de fluide selon la revendication 8, dans lequel le moyen électronique (40) indépendant des raccords est mobile le long du tube (2).

10. Dispositif de circulation de fluide selon l'une quelconque des revendications 8 et 9, dans lequel le moyen électronique (40) indépendant des raccords comporte au moins une carte électronique (5') et un connecteur (6') coopérant avec la carte électronique (5') et la piste conductrice (3) du tube de circulation de fluide (2) de manière à permettre la transmission d'un signal entre la carte électronique (5') et la piste conductrice (2) via le connecteur (6').

11. Dispositif de circulation de fluide selon l'une quelconque des revendications 8 à 10, dans lequel le moyen électronique (40) indépendant des raccords comporte au moins un indicateur (42) agencé pour délivrer une information de nature sonore et/ou visuelle caractéristique d'un signal transmis via une piste conductrice (3).

12. Dispositif de circulation de fluide selon la revendication 1, dans lequel au moins un connecteur (6, 6') est disposé à la périphérie du trou (5.1) pour relier électriquement la carte électronique (5, 5') et la piste conductrice (3) du tube de circulation de fluide (2).

13. Dispositif de circulation de fluide selon l'une quelconque des revendications 1 et 4 à 12, dans lequel le connecteur (6, 6') est une cosse conductrice flexible agencée de sorte à pouvoir coulisser le long d'une piste conductrice (3).

14. Dispositif de circulation de fluide selon l'une quelconque des revendications précédentes, dans lequel une protection est rapportée sur la surface externe du tube pour protéger les pistes conductrices.

## Patentansprüche

1. Fluidzirkulationsvorrichtung (1), umfassend mindestens ein Fluidzirkulationsrohr (2), einen ersten Anschluss (10a), der auf dichte Weise mit einem ersten Ende (2a) des Rohrs (2) verbunden ist, und einen zweiten Anschluss (10b), der auf dichte Weise mit einem zweiten Ende (2b) des Rohrs (2) verbunden ist, derart, dass die Fluidzirkulation zwischen diesen beiden Anschlüssen (10a, 10b) über das Rohr (2) ermöglicht wird, wobei die Vorrichtung (1) ferner elektronische Mittel (20) umfasst, die voneinander getrennt sind, und das Rohr (2) mindestens eine Leiterbahn (3) umfasst, die sich entlang einer Außenfläche des Rohres (2) erstreckt, wobei die Bahn (3) für die Übertragung mindestens eines Signals geeignet und ausgebildet ist, um mit den vorgenannten elektronischen Mitteln (20) zusammenzuwirken, **dadurch gekennzeichnet, dass** mindestens eines der elektronischen Mittel (20) mindestens eine Leiterplatte (5, 5') umfasst, die ein Loch (5.1) enthält, das derart ausgebildet ist, dass das Fluidzirkulationsrohr (2) durch die Leiterplatte (5, 5') hindurchgeht.

2. Fluidzirkulationsvorrichtung nach Anspruch 1, bei der die Leiterbahn (3) ein leitendes metallisiertes Band ist, das auf der Außenfläche des Rohres (2) befestigt ist.

3. Fluidzirkulationsvorrichtung nach Anspruch 1, bei der die Leiterbahn (3) ein aufgedruckter leitender Tintenstreifen ist.

4. Fluidzirkulationsvorrichtung nach einem der vorhergehenden Ansprüche, bei der mindestens eines der elektronischen Mittel (20) einen Steckverbinder (6) umfasst, der mit der Leiterplatte (5) und der Leiterbahn (3) des Fluidzirkulationsrohres (2) derart zusammenwirkt, dass die Übertragung eines Signals zwischen der Leiterplatte (5) und der Leiterbahn (2) über den Steckverbinder (6) ermöglicht wird.

5. Fluidzirkulationsvorrichtung nach einem der vorhergehenden Ansprüche, bei der mindestens einer der beiden Anschlüsse (10a, 10b) ein primäres elektronisches Mittel (20) umfasst.

6. Fluidzirkulationsvorrichtung nach Anspruch 5, bei der mindestens eines der elektronischen Mittel (20) außerhalb des Anschlusses (10a, 10b) befestigt ist.

7. Fluidzirkulationsvorrichtung nach Anspruch 5, bei der mindestens eines der elektronischen Mittel (20) in einer Anschlussaufnahme (10a, 10b) enthalten ist.

8. Fluidzirkulationsvorrichtung nach einem der vorhergehenden Ansprüche, umfassend mindestens ein sekundäres elektronisches Mittel (40), das unabhängig von den Anschlüssen (10a, 10b) ist.

9. Fluidzirkulationsvorrichtung nach Anspruch 8, bei der das von den Anschlüssen unabhängige elektronische Mittel (40) entlang des Rohres (2) beweglich ist.

10. Fluidzirkulationsvorrichtung nach einem der Ansprüche 8 und 9, bei der das von den Anschlüssen unabhängige elektronische Mittel (40) mindestens eine Leiterplatte (5') und einen Steckverbinder (6') umfasst, der mit der Leiterplatte (5') und der Leiterbahn (3) des Fluidzirkulationsrohres (2) derart zusammenwirkt, dass die Übertragung eines Signals zwischen der Leiterplatte (5') und der Leiterbahn (2) über den Steckverbinder (6') ermöglicht wird.

11. Fluidzirkulationsvorrichtung nach einem der Ansprüche 8 bis 10, bei der das von den Anschlüssen unabhängige elektronische Mittel (40) mindestens einen Indikator (42) umfasst, der so ausgebildet ist, dass er eine Information akustischer und/oder visueller Art liefert, die charakteristisch für ein über eine Leiterbahn (3) übertragenes Signal ist.

12. Fluidzirkulationsvorrichtung nach Anspruch 1, bei der mindestens ein Steckverbinder (6, 6') am Umfang des Loches (5.1) angeordnet ist, um die Leiterplatte (5, 5') und die Leiterbahn (3) des Fluidzirkulationsrohrs (2) elektrisch zu verbinden.

13. Fluidzirkulationsvorrichtung nach einem der Ansprüche 1 und 4 bis 12, bei der der Steckverbinder (6, 6') ein flexibler leitender Kabelschuh ist, der so ausgebildet ist, dass er entlang einer Leiterbahn (3) gleiten kann.

14. Fluidzirkulationsvorrichtung nach einem der vorhergehenden Ansprüche, bei der ein Schutz auf der Außenfläche des Rohres befestigt ist, um die Leiterbahnen zu schützen.

## Claims

1. A fluid circulation device (1) comprising at least one fluid circulation tube (2), a first coupling (10a) sealingly coupled to a first end (2a) of the tube (2) and a second coupling (10b) sealingly coupled to a second end (2b) of the tube (2) in such a way as to allow the circulation of fluid between said two couplings (10a, 10b) via the tube, the device (1) further comprising separate electronic means (20), and the tube (2) comprising at least one conductor track (3) extending along an outer surface of the tube (2), with said track (3) being suitable for transmitting at least one signal and arranged in such a way as to engage with the abovementioned electronic means (20), **characterized in that** at least one of the electronic means comprises at least one electronic card (5, 5') including a hole (5.1) arranged in such a way that the fluid circulation tube (2) goes through the electronic card (5, 5').

2. A fluid circulation device according to claim 1, wherein the conductor track (3) is a conductive metal strip added on the outer surface of the tube (2).

3. A fluid circulation device according to claim 1, wherein the conductor track (3) is a printed conductive ink strip.

4. A fluid circulation device according to any one of the preceding claims, wherein at least one of the electronic means (20) includes at least one electronic card (5) and one connector (6) engaging with the electronic card (5) and the conductor track (3) of the fluid circulation tube (2) in such a way as to allow the transmission of a signal between the electronic card (5) and the conductor track (3) via the connector (6).

5. A fluid circulation device according to any one of the preceding claims, wherein at least one of the two couplings (10a, 10b) includes a primary electronic means (20) .

6. A fluid circulation device according to claim 5, wherein at least one of the electronic means (20) is attached outside the coupling (10a, 10b).

7. A fluid circulation device according to claim 5, wherein at least one of the electronic means (20) is received in a coupling (10a, 10b) housing.

8. A fluid circulation device according to any one of the preceding claims, including at least one secondary electronic means (40) independent of the couplings (10a, 10b) .

9. A fluid circulation device according to claim 8, wherein the electronic means (40) independent of the couplings is movable along the tube (2).

10. A fluid circulation device according to any one of claims 8 and 9, wherein the electronic means (40) independent of the couplings includes at least one electronic card (5') and a connector (6") engaging with the electronic card (5') and the conductor track (3) of the fluid circulation tube (2) in such a way as to allow the transmission of a signal between the electronic card (5') and the conductor track (3) via the connector (6').

11. A fluid circulation device according to any one of claims 8 to 10, wherein the electronic means (40) independent of the couplings includes at least one indicator (42) arranged in such a way as to deliver sound and/or visual information characteristic of a signal transmitted via a conductor track (3).

12. A fluid circulation device according to claim 1, wherein at least one connector (6, 6") is positioned at the periphery of the hole (5.1) in order to electrically connect the electronic card (5, 5') and the conductor track (3) of the fluid circulation tube (2).

13. A fluid circulation device according to any one of claims 1 and 4 to 12, wherein the connector, (6, 6") is a flexible conductive lug arranged in such a way as to be able to slide along a conductor track (3).

14. A fluid circulation device according to any one of the preceding claims, wherein a protection is added on the outer surface of the tube to protect the conductor tracks.
